# EUROPEAN PATENT APPLICATION

(11) **EP 2 180 381 A1**
(43) Date of publication of application: **28.04.2010**
(21) Application number: 08790224.3
(22) Date of filing: 18.07.2008
(51) Int. Cl.: G03H 1/18, B65D 25/20

(54) **FILM WITH HOLOGRAM PATTERN AND CONTAINER WITH HOLOGRAM PATTERN**

(30) Priority: 20.07.2007 JP 2007190239
(71) Applicant: Toyo Seikan Kaisha, Ltd., Tokyo 100-8522 (JP)
(72) Inventor: AKIMOTO, Munekazu, Yokohama-shi Kanagawa 230-0001 (JP); HIRATA, Katsuyuki, Yokohama-shi Kanagawa 230-0001 (JP)
(74) Representative: Winter, Brandl, Fürniss, Hübner Röss, Kaiser, Polte Partnerschaft Patent- und Rechtsanwaltskanzlei
(86) International application number: PCT/JP2008/001922
(87) International publication number: WO 2009/013883

(57) **Abstract**

There is provided a film having hologram pattern and a container having hologram pattern which prevents the hologram pattern from disappearing by liquid droplets, sebum, and sweat being adhered to the hologram pattern, and in which, the hologram pattern can be checked visually, without selecting a state and a condition of storage, transportation, and arrangement, during a period after manufactured till consumed. The film having hologram pattern of the present invention which is to be used by disposing on an outer surface of an object includes a hologram-pattern forming layer, on one surface of which, a hologram pattern is formed, and a thin-film layer is formed along that shape, on the hologram pattern, and at least one layer which is disposed at an outer side of the hologram-pattern forming layer.

## Description

### TECHNICAL FIELD

The present invention relates to a film having hologram pattern and a container having hologram pattern, and regarding the film having hologram pattern, particularly, relates to a film having hologram pattern, which can be used for containers and packages which accommodate beverages or food.

### BACKGROUND ART

In recent years, for a decoration purpose, containers, packages, and other objects provided with a hologram pattern on an outer surface thereof have been proposed. A method in which, this hologram pattern, which is an interference fringe pattern recorded on a plane surface, let to have a fine uneven shape in an embossed form or a relief form, is formed directly on an outer surface of a container, or a pattern which is formed separately, is stuck to the outer surface of the container, is being studied.

A method in which, a metallic plate on which, an uneven hologram pattern is connected to the outer surface of the container which is an object, has been proposed as a method for forming the hologram pattern directly on the outer surface of the container. Moreover, as a method for forming the hologram pattern separately, a method in which, an uneven hologram pattern formed on a mother die made of a metallic thin film is formed by pressurizing on a thermoplastic resin or an ultraviolet-cured resin, and is adhered to the outer surface of the container after the resin is cured, has been proposed (Patent literatures 1 and 2).

In these hologram patterns, without forming a protective layer on an outer side, the hologram pattern has been formed as the outermost layer. This is because, when the uneven hologram pattern is filled by a material having a refractive index same as a refractive index of a material which forms the hologram pattern, there is a possibility that a hologram effect disappears.

Whereas, in a process of manufacturing canned food and a process of manufacturing a can which is one of the objects on which the hologram pattern is stuck, for improvement in the productivity, it is preferable to apply a paint for improving a slipping property, on an outer surface of a can
Patent literature 1: Japanese Patent Application Laid-open Publication No. Hei 11-268746.
Patent literature 2: Japanese Patent Application Laid-open Publication No. 2000-128176

### DISCLOSURE OF THE INVENTION

However, when an object is such as a container which is to be kept refrigerated, frozen, or in water during storage, transportation, and arrangement in shop etc. during a period after manufactured till consumed, and other object, there is a possibility that the hologram pattern disappears. In other words, when the uneven pattern is filled due to adhering of water droplets from condensation, and adhering of water for cooling, when a refractive index of water and a refractive index of a material forming the hologram pattern are close, the hologram pattern disappears, and the hologram effect cannot be exhibited.

Moreover, due a person handling the object or a consumer who has purchased the object touching the hologram pattern, there is a possibility that the hologram pattern disappears. This occurs due to the uneven pattern being filled by sebum from the hand, sweat from the hand, and water on the hand of the person handling or the consumer.

Furthermore, in a case of forming a hologram pattern on an outer surface of a can, for maintaining the hologram effect, it is not possible to apply paint on the hologram pattern for improving the slipping property. This is because, when the uneven pattern is filled by the paint, there is a possibility that the hologram effect disappears. In this manner, as the paint for improving the slipping property cannot be applied, in a can having a hologram pattern, degradation of productivity of manufacturing of the can and productivity of manufacturing of canned food cannot be helped, and there is a possibility that this leads to a rise in a production cost.

Therefore, an object of the present invention is to provide a film having hologram pattern and a container having hologram pattern which enables to prevent the hologram pattern from disappearing due to water droplets, sebum, and sweat adhered to the hologram pattern, and which enables to exhibit the hologram effect during storage, transportation, and arrangement in shop etc. during a period after manufactured till consumed. Consequently, an object of the present invention is to provide a film having hologram pattern and a container having hologram pattern in which, the hologram pattern can be checked visually, without selecting a state and a condition of storage, transportation, and arrangement.

Furthermore, an object of the present invention is to provide a film having hologram pattern and a container having hologram pattern in which, it is possible to apply a paint on the hologram pattern for improving a slipping property, and accordingly, there is no degradation of productivity of a manufacturing process of cans and a manufacturing process of canned food.

### MEANS FOR SOLVING THE PROBLEM

To solve the abovementioned problems, a film having hologram pattern of the present invention, which is to be used by disposing on an outer surface of an object, includes a hologram-pattern forming layer, on one surface of which, a hologram pattern is formed, and a thin-film layer is formed along that shape, on the hologram pattern, and at least one layer which is disposed at an outer side of the hologram-pattern forming layer.

In the film having hologram pattern of the present invention, it is preferable that the hologram-pattern forming layer is disposed such that the hologram pattern comes to an outer surface side of the object, and the thin-film layer is a vapor deposition layer. It is preferable that the vapor deposition layer has reflectivity, or transparency and high refractive index.

In the film having hologram pattern of the present invention, a resin layer may be formed at a distant side from an outer surface of the object with respect to the hologram-pattern forming layer.

In the film having hologram pattern of the present invention, the resin layer may be a resin film on which, the hologram-pattern forming layer is formed.

In the film having hologram pattern of the present invention, it is preferable that the hologram-pattern forming layer is formed as a film on the resin layer, via an ink layer.

In the film having hologram pattern of the present invention, a second ink layer which is different from the ink layer may be formed on a surface of a resin layer, on an opposite side of a surface on which, the ink layer and the hologram-pattern forming layer are formed.

In the film having hologram pattern of the present invention, an ink layer may be formed on a surface of the resin layer, which is distant from the outer surface of the object.

In the film having hologram pattern of the present invention, it is preferable that the ink layer is formed directly on the resin layer.

In the film having hologram pattern of the present invention, it is desirable that the film having hologram pattern is stuck to the outer surface of the object by an adhesive layer which is formed on the vapor deposition layer.

In the a film having hologram pattern according to a second aspect of the present invention, the hologram pattern forming layer is disposed such that the hologram pattern comes at a side distant from the outer surface of the object, and the thin-film layer is a vapor deposition layer.

In the film having hologram pattern according to the second aspect of the present invention, it is preferable that in the hologram-pattern forming layer, a resin layer is disposed on an outer surface side of the object.

In the film having hologram pattern according to the second aspect of the present invention, in the resin layer, an ink layer may be formed on a surface on an outer surface side of the object.

In the film having hologram pattern according to the second aspect of the present invention, the vapor deposition layer may have transparency and high refractive index.

In the film having hologram pattern according to the second aspect of the present invention, it is preferable that the resin layer is a PET film.

In the film having hologram pattern of the present invention, a container can be selected as the object.

A container having hologram pattern of the present invention includes a hologram-pattern forming layer on an outer surface, on one surface of which, a hologram pattern is formed, and a thin-film layer is formed along a shape thereof, on the hologram pattern, and furthermore, at least one layer is disposed at an outer side of the thin-film layer.

### EFFECT OF THE INVENTION

According to the present invention, as a structure is made such that a hologram-pattern forming layer, on one surface of which, a hologram pattern is formed, and a thin-film layer is formed along a shape thereof, on the hologram pattern, is included at an inner side of a layer structure, since the hologram-pattern forming layer or the thin-film layer does not exist on the outermost surface of the object, it is possible to prevent the hologram pattern from disappearing due to water droplets, sebum, and sweat adhered to the hologram pattern. Accordingly, it is possible to check the hologram pattern visually without selecting a state and a condition of storage, transportation, and arrangement.

Moreover, according to the abovementioned structure, since the hologram pattern does not disappear even when a paint for improving a slipping property is applied on the hologram pattern, it is possible to provide a film having hologram pattern and a container having hologram pattern without degradation of productivity of a manufacturing process of cans and a manufacturing process of canned food.

### BRIEF DESCRIPTION OF THE DRAWINGS

Fig. 1 is a cross-sectional view in which, a layer structure of a film having hologram pattern and a container having hologram pattern according to a first aspect of the present invention is shown in each step;
Fig. 2 is a cross-sectional view in which, a layer structure of a film having hologram pattern and a container having hologram pattern according a modified embodiment of the first embodiment is shown in each step;
Fig. 3 is a cross-sectional view in which, a layer structure of a film having hologram pattern and a container having hologram pattern according to a second modified embodiment of the first embodiment is shown in each step;
Fig. 4 is a cross-sectional view in which, a layer structure of a film having hologram pattern and a container having hologram pattern according to a third modified embodiment of the first embodiment is shown in each step;
Fig. 5 is a cross-sectional view in which, a film having hologram pattern and a container having hologram pattern according to a second embodiment of the present invention is shown in each step; and
Fig. 6 is a cross-sectional view in which, a film having hologram pattern and a container having hologram pattern according to a modified embodiment of the second embodiment is shown in each step.

### DESCRIPTION OF REFERENCE NUMERALS

- 10: film having hologram pattern
- 11: base material film (resin layer)
- 11a: outer surface
- 12: ink layer
- 13: hologram-pattern forming layer
- 13a: outer surface
- 14: hologram pattern
- 15: vapor deposition layer (thin-film layer)
- 16: varnish layer
- 21: container (object)
- 21a: outer layer
- 23: adhesive layer
- 30: container having hologram pattern
- 40: outermost-layer film
- 41: base material film form outermost layer (resin layer)
- 41a: outer surface
- 42: ink layer
- 43: adhesive layer
- 46: varnish layer
- 50: film having hologram pattern
- 51: base material film (resin layer)
- 53: hologram-pattern forming layer
- 53a: outer surface
- 54: hologram pattern
- 55: vapor deposition layer (thin-film layer)
- 60: container having hologram pattern
- 110: film having hologram pattern
- 111: base material film
- 111a: outer surface
- 112: ink layer
- 113: hologram-pattern forming layer
- 113a: outer surface
- 114: hologram pattern
- 115: vapor deposition layer (thin-film layer)
- 116: varnish layer
- 130: container having hologram pattern
- 140: printing film
- 141: base material film (resin layer)
- 141a: outer surface
- 141b: inner surface
- 142: ink layer
- 143: adhesive layer
- 146: varnish layer
- 150: film having hologram pattern
- 151: base material film (resin layer)
- 153: hologram-pattern forming layer
- 153a: outer surface
- 154: hologram pattern
- 155: vapor deposition layer (thin-film layer)
- 160: container having hologram pattern
- 210: film having hologram pattern
- 211: base material film (resin layer)
- 211a: outer surface
- 211b: inner surface
- 212: ink layer
- 213: hologram-pattern forming layer
- 214: hologram pattern
- 215: vapor deposition layer (thin-film layer)
- 216: varnish layer
- 223: adhesive layer
- 230: container having hologram pattern
- 310: film having hologram pattern
- 311: base material film (resin layer)
- 311a: outer surface
- 311b: inner surface
- 312: ink layer
- 313: hologram-pattern forming layer
- 313a: outer surface
- 314: hologram pattern
- 315: vapor deposition layer (thin-film layer)
- 316: varnish layer
- 322: second ink layer
- 323: adhesive layer
- 330: container having hologram pattern

### BEST MODE FOR CARRYING OUT THE INVENTION

A film having hologram pattern and a container having hologram pattern according to embodiments of the present invention will be described below in detail while referring to the accompanying diagrams.

The film having hologram pattern according to the embodiments of the present invention is a film in a sheet form, a roll-film form, and a label form which is to be used by disposing on an outer surface of containers, packages, and other objects which accommodate beverages or food. Containers such as a metal can, a plastic container, a container and a package made of paper, and a container including aluminum can be cited as examples the object.

This film having hologram pattern includes a hologram-pattern forming layer, and a hologram pattern is formed on one surface of this hologram-pattern forming layer, and a thin-film layer is formed along a shape thereof, on the hologram pattern. The thin-film layer is formed may a method such as vapor deposition, sputtering, and CVD (chemical vapor deposition). In other words, the thin-film layer is not a layer which fills an uneven pattern of the hologram pattern.

Resins such as a thermoplastic resin, an ultraviolet cured resin, and a self-curable resin can be used as the hologram-pattern forming layer. The hologram pattern is formed by curing by a method according to a material, after an uneven hologram pattern formed on a mother die is formed by pressurizing on a material which forms the hologram-pattern forming layer.

The hologram-pattern forming layer is disposed such that the hologram pattern comes to an outer surface side of an object, or to a side distant from an outer surface of the object. When the hologram-pattern forming layer is disposed such that the hologram pattern comes to the outer surface side of the object (so as to be directed toward the outer surface of the object), it is preferable that the thin-film layer which is formed on the hologram pattern has a reflectivity, or a transparency and a high refractive index. The thin-film layer in this case, when to be imparted reflectivity, can be formed by vapor depositing aluminum, and when to be imparted transparency and high refractive index, can be formed by vapor depositing titanium oxide, aluminum oxide, zinc oxide, zinc sulfide, a zirconium compound, zinc sulfide, silicon oxide, and indium tin oxide (ITO).

The film having hologram pattern is stacked in order between an ink layer and the thin-film layer, sandwiching at least one of the hologram-pattern forming layer and the resin layer. Consequently, by a material (such as a vapor deposition material) which forms the thin-film layer making a direct contact with the ink layer, it is possible to suppress an effect on value, hue, and saturation of ink.

When the film having hologram pattern which is let to have such structure is stuck to the outer surface of the object, since incident light which has passed through the hologram-pattern forming layer is reflected or refracted according to unevenness of the thin-film layer, it is possible to check the hologram pattern visually. Furthermore, as the hologram-pattern forming layer is disposed on the outer side of the hologram pattern, and furthermore, at least one layer (such as a varnish layer) is disposed at an outer side thereof, since it is possible to lower extremely a possibility that water droplets due to condensation, sebum of the hand, sweat from the hand, and water adhered to the hand of a person handling or a consumer are adhered to the hologram pattern, it is possible to prevent disappearing of the hologram pattern. Furthermore, it is possible to apply a general purpose paint for improving a slipping property on an outer side of the hologram-pattern forming layer, and accordingly, it is possible to prevent degradation in productivity of a manufacturing process of can and a manufacturing process of canned food.

Whereas, when the hologram pattern is disposed to come to the side distant from the outer surface of the object, it is preferable that the thin-film layer which is to be formed on the hologram pattern has transparency and high refractive index. It is preferable that the thin-film layer has transparency, and is formed of a material having a substantial refractive index (such as titanium oxide, aluminum oxide, zinc oxide, zinc sulfide, a zirconium compound, zinc sulfide, silicon oxide, and indium tin oxide (ITO)).

When the film having hologram pattern which is let to have such structure is stuck to the outer surface of the object, since incident light is refracted according to the unevenness of the thin-layer film, it is possible to check the hologram pattern visually. Moreover, by the thin-film layer being disposed on the outer side of the hologram pattern, and furthermore, at least one more layer (such as a varnish layer) being disposed at the outer side thereof, it is possible to reduce a possibility that water droplets due to condensation, sebum of the hand, sweat from the hand, and water adhered to the hand of a person handling or a consumer are adhered to the uneven hologram pattern, and even when adhered, by the transparency and the high refractive index of the thin-film layer, it is possible to prevent disappearing of the hologram pattern.

Furthermore, by forming the thin-film layer by a transparent material having high refractive index, or by a reflective material, it is possible to stack paint for improving the slipping property or a transparent-material layer on the hologram pattern. In other words, even when the uneven hologram pattern is filled by paint, by the reflectivity or the high refractive index of the thin-film layer, it is possible to maintain a visibility of the hologram pattern. Moreover, when a paint for improving the slipping property is applied, it is possible to prevent degradation in productivity of the manufacturing process of can and the manufacturing process of canned food.

A first embodiment in which, a hologram pattern is disposed at an outer surface side of a container which is an object, and a second embodiment in which, a hologram pattern is disposed at a side distant from the outer surface of the object will be described below in detail one after another.

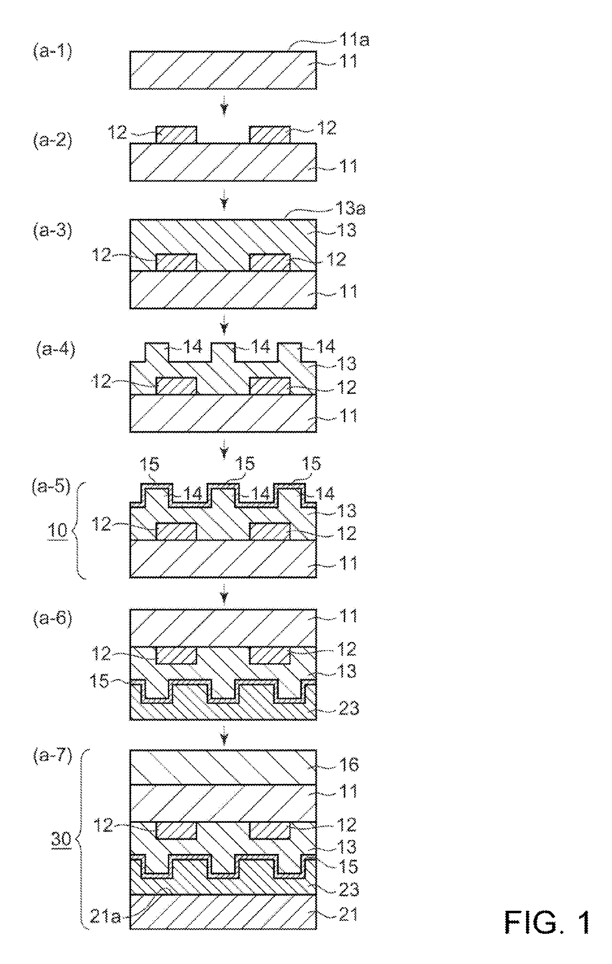

### <First embodiment> (Fig. 1)

A film having hologram pattern 10 according to the first embodiment is disposed such that a hologram pattern 14 comes to a side of an outer surface 21a of a container 21 which is the object, and accordingly, a container having hologram pattern 30 is formed. A structure thereof will be described below in order of a manufacturing process of each step, while referring to Fig. 1. In the first embodiment, a container is let to be the object. However, the present invention is also applicable to an object other than a container.

(1) Process of manufacturing film with hologram pattern It is preferable that a base material film 11 (resin layer) (Fig. 1 (a-1)) on which, an ink layer 12 and a hologram-pattern forming layer 13 are provided, is formed of a material having a transparency, and films such as a PET (polyethylene terephthalate) film, a film made of nylon (trademark), and an OPP (drawn polypropylene) film, and other films made of resin can be used.

The ink layer 12 is formed on an outer surface 11a (a surface on a side near the outer surface 21a when the film having hologram pattern 10 is stuck to the outer surface 21a of the container 21). The ink layer 12 is formed to become a pattern determined in advance by gravure for example (Fig. 1 (a-2)).

Next, the hologram-pattern forming layer 13 is formed on the ink layer 12, at a portion in which, the ink layer 12 is formed, and on the base material film 11, at a portion in which, the ink layer 12 is not formed (Fig. 1 (a-3)). For the hologram-pattern forming layer 13, a material such as a thermoplastic resin, an ultraviolet-cured resin, and a self-curable material can be used provided that it is a material having transparency at least after curing. The hologram-pattern forming layer is formed by a method such as transferring by a coating roll, spraying by spray, and spin coating. The hologram-pattern forming layer 13, only for a portion on which the ink layer 12 is not formed, can be formed on the base material film 11.

Next, a hologram pattern is formed on an outer surface 13a of the hologram-pattern forming layer 13. The formation of the hologram pattern is carried out by pressing a mother die which is formed separately, against the outer surface 13a of the hologram-pattern forming layer 13 in an uncured state. After pressing, by stopping heating if it is a thermoplastic resin, by irradiating ultraviolet rays if it is a ultraviolet-cured resin, and by leaving till an internal reaction is completed if it is a self-curable material, the hologram-pattern forming layer 13 is cured, and a hologram pattern 14 is fixed to the outer surface thereof (Fig. 1 (a-4)).

Here, the mother die is formed in the following manner. In other words, a laser interference film is exposed on a plate on which a photoresist is applied, and after an uneven resist pattern according to a density of an interference fringe is formed, a thin film is formed by vapor depositing a metal on the resist pattern, and nickel is plated thereon. Next, by peeling a plating layer, a mother die having a fine uneven hologram pattern transferred precisely on nickel is formed.

Finally, a vapor deposition layer 15 as a thin-film layer along that pattern is formed on the hologram pattern 14 (Fig. 1 (a-5)). In the first embodiment, the vapor deposition layer 15 having reflectivity, or transparency and high refractive index is formed. Here, the reflective index is high means having a refractive index such as 20% or more, and preferably 30% or more of a material which is an object of comparison (the hologram-pattern forming film 13 in the film having hologram pattern 10 according to the first embodiment). As a material forming the vapor deposition layer 15, for a reflective material, aluminum can be cited as an example, and for a material having transparency and high refractive index, materials such as titanium oxide, aluminum oxide, zinc oxide, zinc sulfide, a zirconium compound, zinc sulfide, silicon oxide, and indium tin oxide (ITO) can be cited as examples. The film having hologram pattern 10 is formed by the abovementioned process.

Process of sticking film having hologram pattern Firstly, an adhesive layer 23 is formed by applying an adhesive material on the vapor deposition layer 15 (Fig. 1 (a-6)). As the adhesive material to be used for the adhesive layer, an arbitrary material can be used, and a material for which, curing is not completed during a job of sticking the film having hologram pattern 10 to the container 21, and which is cured rapidly after the job of sticking, is preferable. A material such as a heat-curable material, a thermoplastic material, an ultraviolet-cured material, and a self-curable material can be cited as an example of such adhesive material.

Next, by curing the adhesive layer 23 while allowing the uncured adhesive layer 23 to be in contact with the outer surface 21a of the container 21, the film having hologram pattern 10 is stuck to the container 21 (Fig. 1 (a-7)). By this process, the hologram-pattern forming layer 13 is fixed to the container 21 in a state of a side of the hologram pattern 14 being disposed to come to a side of the outer surface 21a of the container 21, and the base material film 11 being disposed at the farthest position from the container 21.

Finally, a varnish layer 16 is formed by applying varnish on the base material film 11 (Fig. 1 (a-7), and the container having hologram pattern 30 is completed. The varnish layer 16 can be applied in advance on the base material film 11 before sticking the film having hologram pattern 10 to the container 21 (such as after the film having hologram pattern 10 is formed, and before forming the adhesive layer 23). Moreover, the container having hologram pattern 30 can be used in a state of the varnish layer 16 not formed.

As the varnish layer 16 can be formed on the base material film, or in other words, on the outermost layer of the container having hologram pattern 30, since it is possible to achieve the slipping property and gloss as was achieved conventionally, it is possible to manufacture a container having a high quality decorativeness and design without degrading productivity of a manufacturing process of the container.

As it has been structured as described above, according to the abovementioned embodiment, the following effects (1) to (4) are shown.
(1) Since the vapor deposition layer 15 which has reflectivity, or transparency and high refractive index is formed along the shape of the hologram pattern 14, on the hologram pattern 14, it is possible to make reflect or refract according to the shape of the hologram pattern 14, and accordingly, it is possible to check the hologram pattern visually.
(2) Since the hologram-pattern forming layer 13 exists all the time at an outer side of the hologram pattern 14 by the hologram pattern 14 being formed on one layer (the outer surface 13a) of the hologram-pattern forming layer 13, and moreover, by the hologram-pattern forming layer 13 being disposed such that the hologram pattern 14 is on the side of the container 21, it is possible to prevent the hologram pattern from disappearing due to adhering of water droplets, sebum, and sweat on the hologram pattern 14. Consequently, the hologram pattern can be checked visually, without selecting a state and a condition of storage, transportation, and arrangement.
(3) Since it is possible to apply the varnish layer 16 or a paint for improving the slipping property on the outermost layer without making the hologram pattern 14 disappear, there is no degradation in productivity of a manufacturing process of a container and a process of filling the content.
(4) By providing the ink layer 12 on an outer side of the hologram pattern 14, as it is possible check the pattern of the ink visually by making disappear the hologram pattern at a portion where the ink layer 12 is there, and it is possible to check the hologram pattern visually at a portion where the ink layer 12 is not there, it is possible to provide film having hologram pattern and a container having hologram pattern having higher decorativeness.

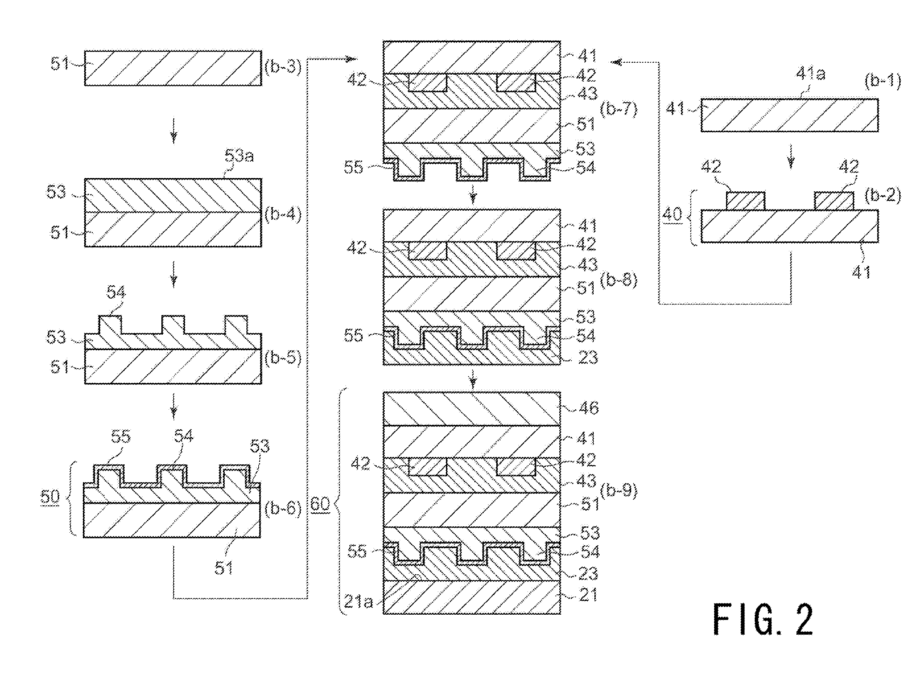

A modified embodiment of the first embodiment will be described below while referring to Fig. 2.
In the first embodiment described above, the ink layer 12 and the hologram-pattern forming layer 13 have been stacked on the base material film 11. Instead of this, as shown in Fig. 2, after an ink layer 42 and a hologram-pattern forming layer 53 are formed on separate base material films, these base material films can be stacked on the container 21. Details will be described below in detail while referring to Fig. 2. Same reference numerals are assigned to components having a structure common as in the first embodiment, and detail description thereof is omitted.

A film having hologram pattern 50 according to the modified embodiment shown in Fig. 2 is disposed to be integrated with an outermost layer film 40 such that, the hologram pattern 54 comes to the side of the outer surface 21a of the container 21 which is the object, and accordingly, a container having hologram pattern 60 is formed.

(1) Process of manufacturing outermost layer film
A base material film for outermost layer 41 on which the ink layer 42 is provided (Fig. 2 (b-1)) is of a material similar to the base material film 11 of the first embodiment, and by a similar method, the ink layer 42 is formed on an outer surface 41a of the base material film for outermost layer 41 (Fig. 2 (b-2)). The outermost layer film 40 is formed by the abovementioned process.

(2) Process of manufacturing film having hologram pattern
A material similar to a material of the base material film 11 can be used for a base material film 51 on which, a hologram-pattern forming layer 53 is to be provided (Fig. 2 (b-3)), and the hologram-pattern forming layer 53 is formed on this base material film 51 (Fig. 2 (b-4)). The hologram-pattern forming layer 53 can be formed by a similar method by using a material similar to a material of the hologram-pattern forming layer 13 of the first embodiment.

Next, the hologram pattern 54 is formed on an outer surface 53a of the hologram-pattern forming layer 53 (Fig. 2 (b-5)). The formation of the hologram pattern 54 is carried out similarly as the formation of the hologram pattern 14 of the first embodiment.

Finally, a vapor deposition layer 55 as a thin-film layer is formed on the hologram pattern 54, along the pattern (Fig. 2 (b-6)). This vapor deposition layer 55 is a layer having reflectivity, or transparency and high refractive index similarly as in the first embodiment. The film having hologram pattern 50 is formed by the process described above.

(3) Process of sticking film having hologram pattern Firstly, an adhesive layer 43 is formed by applying an adhesive material on the outer surface 41a on which, the ink layer 42 of the outermost layer film 40 is provided. An adhesive material similar to the adhesive layer 23 of the first embodiment is used. Next, by curing the adhesive layer 43 while dabbing the uncured adhesive layer 43 at a surface of the base material film 51 on which the hologram pattern 54 is not formed, the outermost layer film 40 and the film having hologram pattern 50 are stuck mutually (Fig. 2 (b-7)).

Next, the adhesive layer 23 is formed by applying an adhesive material on the vapor deposition layer 55 (Fig. 2 (b-8)). An adhesive material similar as in the first embodiment is used. Next, by curing the adhesive layer 23 while dabbing the uncured adhesive layer 23 at the outer surface 21a of the container 21, the outermost layer film 40 and the film having hologram pattern 50 are stuck to the container 21 (Fig. 2 (b-9)). By this process, the hologram-pattern forming layer 53 is disposed such that the side of the hologram pattern 54 is disposed on the side of the outer surface 21a, and the base material film for outermost layer 41 is disposed at a position farthest from the container 21. Finally, a varnish layer 46 is formed by applying varnish on the base material film for outermost layer 41 (Fig. 2 (b-9)), and the container having hologram pattern 60 is completed. The varnish layer 46 can also be applied in advance on a surface facing the outer surface 41a which forms the ink layer 42, of the base material film for outermost layer 41 before sticking the outermost layer film 40 and the film having hologram pattern 50 (for example, after the outermost layer film 40 is formed and before forming the adhesive layer 43).

In the container having hologram pattern 60 shown in Fig. 2, since the hologram-pattern forming layer 53 can be formed on a surface without the ink layer of the smooth base material film 51, the hologram pattern 54 in which, the shape of the mother die is transferred accurately can be formed.
Other actions and effects are similar as in the first embodiment.

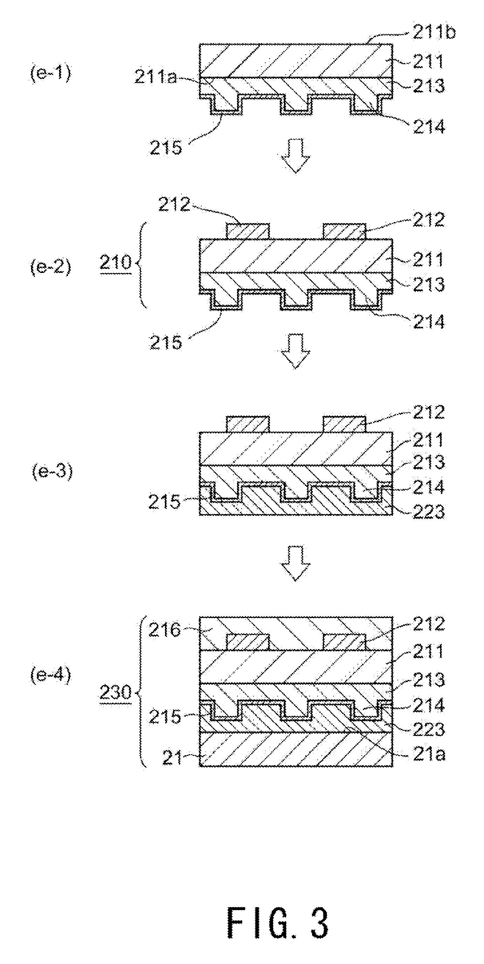

A second modified embodiment of the first embodiment will be described below while referring to Fig. 3. In the first embodiment described above, the hologram-pattern forming layer 13 is stacked further on the ink layer 12 which is stacked on the base material film 11, and in the second modified embodiment, an ink layer 212 and a hologram-pattern forming layer 213 are stacked on opposite surfaces respectively of the base material film 211 as shown in Fig. 3.
Details will be described below in detail while referring to Fig. 3. Same reference numerals are assigned to components having a structure common as in the first embodiment, and detail description thereof is omitted.

Process of manufacturing film having hologram pattern A material similar to the material of the base material film 11 of the first embodiment is used for the base material film 211 (resin layer) on which, the ink layer 212 and the hologram-pattern forming layer 213 are provided. The hologram-pattern forming layer 213 is formed on an outer surface 211a (a surface near to a side of the outer surface 21a when a film having hologram pattern 210 is stuck to the outer surface 21a of the container 21). The hologram-pattern forming layer 213 is formed by a similar method by using a material similar to the hologram-pattern forming layer 13 of the first embodiment. Next, a hologram pattern 214 is formed on an outer surface of the hologram-pattern forming layer 213 by a method similar to the method for forming the hologram pattern 14 of the first embodiment. Furthermore, a vapor deposition film 215 as the thin-film layer is formed along the pattern, on the hologram pattern 214 (Fig. 3 (e-1)). The vapor deposition layer 215 is formed by a similar method by using a material similar to the vapor deposition layer 15 of the first embodiment.

Next, the ink layer 212 is formed on an inner surface 211b of the base material film 211, on an opposite side of the outer surface 211a. This ink layer 12 is formed to become a pattern determined in advance, by a method such as gravure, flexo printing, and ink-jet printer. The film having hologram pattern 210 is formed by the process described above (Fig. 3 (e-2)).

(2) Process of sticking film having hologram pattern Firstly, an adhesive layer 223 is formed by applying an adhesive material on the vapor deposition layer 215 (Fig. 3 (e-3)), and the film having hologram pattern 210 is stuck to the container 21 (Fig. 3 (e-4)). The adhesive layer 223 is formed by a similar method by using a similar material as the adhesive layer 23 of the first embodiment, and is stuck to the outer surface 21a of the container 21 similarly as in the first embodiment.

Furthermore, a varnish layer 216 is formed by applying varnish on the inner surface 211b of the base material film 211, on which the ink layer 212 is stacked, and a container having hologram pattern 230 is completed (Fig. 3 (e-4)). The varnish layer 216 can also be applied in advance on the base material film 211 before sticking the film having hologram pattern 210 to the container 21 (for example after the film having hologram pattern 210 is formed, and before forming the adhesive layer 223).

In the container having hologram pattern 230 shown in Fig. 3, since the hologram-pattern forming layer 213 can be formed on the outer surface 211a without the ink layer of the base material film 211, it is possible to form the hologram pattern 214 in which, a shape of the mother die is transferred accurately.
Other actions and effects are similar as in the first embodiment.

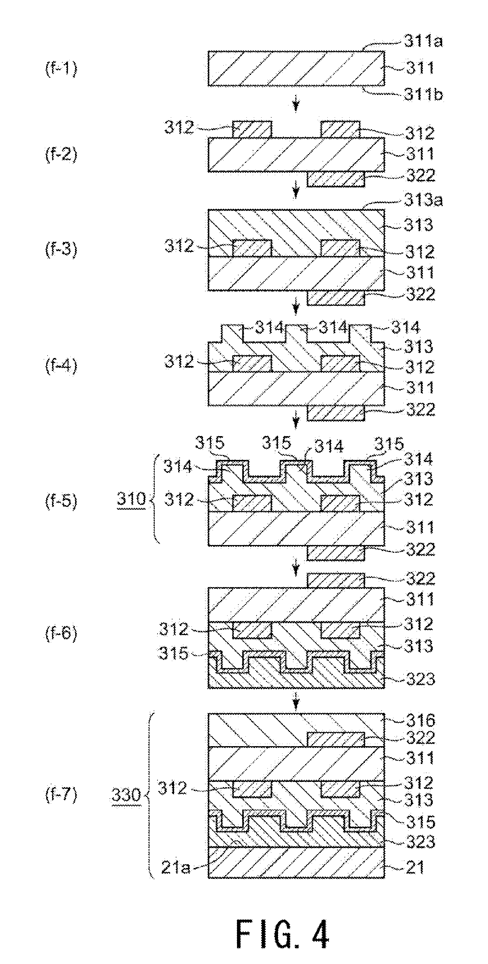

Next, a third modified embodiment of the first embodiment will be described below while referring to Fig. 4. In the third modified embodiment, a second ink layer 322 separate from an ink layer 312 is formed on an inner surface 311b of a base material film 311, on an opposite side of an outer surface 311a on which the ink layer 312 and a hologram-pattern forming layer 313 are formed. A structure other than the second ink layer 322 is similar as in the first embodiment. In other words, a film having hologram pattern 310, the base material film (resin layer) 311, the ink layer 312, the hologram-pattern forming layer 313, a hologram pattern 314, a vapor deposition layer (thin-film layer) 315, a varnish layer 316, an adhesive layer 323, and a container having hologram pattern 330 in the third modified embodiment correspond to the film having hologram pattern 10, the base material film (resin layer) 11, the ink layer 12, the hologram-pattern forming layer 13, the hologram pattern 14, the vapor deposition layer (thin-film layer) 15, the varnish layer 16, the adhesive layer 23, and the container having hologram pattern 30 respectively in the first embodiment. Consequently, the hologram pattern 314 is formed on an outer surface 313a of the hologram-pattern forming surface 313. Moreover, the container (object) 21 and the outer surface 21a are common as in the first embodiment. Structures corresponding to the first embodiment or structures common with the first embodiment being similar to the first embodiment, detail description thereof is omitted.

In a process of manufacturing film having hologram pattern, firstly, the ink layer 312 is formed on the outer surface 311a of the base material film 311, and the second ink layer is formed on the inner surface of the base material film 311 (Fig. 4 (f-2)). Next, the hologram-pattern forming layer 313 is formed on a side of the outer surface 311a of the base material film 311 (Fig. 4 (f-3)). The second ink layer 322 can be formed by a similar method by using a similar material as the ink layer 212, and it is preferable to use a material which matches well with the varnish layer 316.

A mat ink can be used for the second ink layer 322. As a mat ink, an ink containing 10 ∼ 25 phr (per hundred resin) of silica may be used.

After the 210 is stuck on the outer surface 21a of the container 21, varnish is applied on the second ink layer 322, and accordingly, the varnish layer 316 is formed (Fig. 4 (f-7)). Thus, the container having hologram pattern 330 is completed. The varnish layer 316 can also be applied in advance on the base material film 311 before sticking the film having hologram pattern 310 to the container 21 (for example, after the ink layer 312 and the second ink layer 322 are formed, and before stacking the hologram-pattern forming layer 313, or after the film having hologram pattern 310 is formed, and before forming the adhesive layer 323).
Other actions and effects are similar as in the first embodiment.

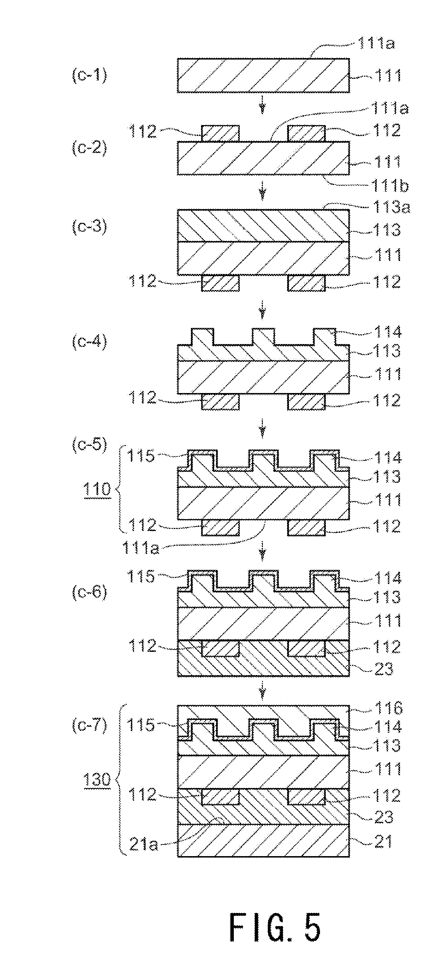

### <Second embodiment> (Fig. 5)

A film having hologram pattern 110 according to a second embodiment is disposed such that a hologram pattern 114 comes to a side distant from the outer surface 21a of the container 21 which is the object, and accordingly, a container having hologram pattern 130 is formed. This structure will be described in order of a manufacturing process of each layer while referring to Fig. 5. Similarly as in the first embodiment, a container is let to be the object in the second embodiment. However, the present invention is also applicable to objects other than container. Moreover, same reference numerals are assigned to components having a structure common in the first embodiment, and detail description thereof is omitted.

(1) Process of manufacturing film having hologram pattern
A material similar to the material of the base material film 11 of the first embodiment can be used for a base material film 111 on which, an ink layer 112 and a hologram-pattern forming layer 113 are formed (Fig. 5 (c-1)). The ink layer 112 is formed similarly as the ink layer 12 of the first embodiment, on an outer surface 111a (a surface which is disposed on a side of the outer surface 21a when a film having hologram pattern 110 is stuck to the outer surface 21a of the container 21) of the base material film 111 (Fig. 5 (c-2)).

Next, the hologram-pattern forming layer 113 is formed on a surface 111b of the base material film 111, facing the outer surface 111a on which the ink layer 112 is provided (Fig. 5 (C-3)). The hologram-pattern forming layer 113 can be formed by a similar method by using a material similar to the material of the hologram-pattern forming layer 13 of the first embodiment.

Next, a hologram pattern 114 is formed on an outer surface 113a of the hologram-pattern forming layer 113 (Fig. 5 (c-4)). Formation of the hologram pattern 114 is carried out similarly as in the first embodiment.

Finally, a vapor deposition layer 115 as the thin-film layer is formed along that pattern, on the hologram pattern 114 (Fig. 5 (c-5)). It is preferable that this vapor deposition layer 115 has transparency and high refractive index. For the vapor deposition layer 115, it is preferable to use a material having a refractive index such as 20% or more, and preferably 30% or more of a material forming a layer which covers the vapor deposition layer 115, such as titanium oxide, aluminum oxide, zinc oxide, zinc sulfide, a zirconium compound, zinc sulfide, silicon oxide, and indium tin oxide (ITO). This is because, by forming the vapor deposition layer 115 of a material having a high refractive index, even when an uneven hologram is filled by a material forming another layer, the hologram pattern does not disappear. The film having hologram pattern 110 is formed by the process described above.

(3) Process of manufacturing film having hologram pattern
Firstly, on the surface 111a of the base material film 111 on which the ink layer 112 is provided, the adhesive layer 23 is formed by applying an adhesive material similarly as the adhesive layer 23 of the first embodiment on the ink layer 112 at a portion where the ink layer 112 is formed, and on the surface 111a at a portion where the ink layer 112 is not formed (Fig. 5 (c-6)).

Next, by curing the adhesive layer 23 while dabbing the uncured adhesive layer 23 at the outer surface 21a of the container 21, the film having hologram pattern 110 is stuck to the container 21 (Fig. 5 (c-7)). By this process, the hologram-pattern forming layer 113 is fixed to the container 21 in a state of the side of the hologram pattern 114 disposed on a side distant from the outer surface 21a of the container 21, and the ink layer 112 disposed on a side of the outer surface 21a of the container 21.

Finally, a varnish layer 116 is formed by applying varnish on the vapor deposition layer 115 (Fig. 5 (c-7)), and the container having hologram pattern 130 is completed. The film having hologram pattern 110 may be stuck to the container 21 after applying the varnish layer 116 to the film having hologram pattern 110. In this case, the varnish layer 116 is formed after formation of the film having hologram pattern 110 and before forming the adhesive layer 23, for example.

In the container having hologram pattern 130 according to the second embodiment, as the vapor deposition layer 115 having transparency and high refractive index is formed on the hologram pattern 114, even when the varnish layer 116 is formed on the vapor deposition layer 115, the hologram pattern does not disappear. Furthermore, a pattern of the ink layer 112 formed on the side of the container 21 can be checked visually.
Moreover, by providing the varnish layer 116, since sebum of the hand, sweat from the hand, and water adhered to the hand of a person handling or a consumer does not reach the vapor deposition layer 115, it is possible to prevent the hologram pattern from disappearing.
Other actions, effects, and modified embodiments are similar to those of the first embodiment.

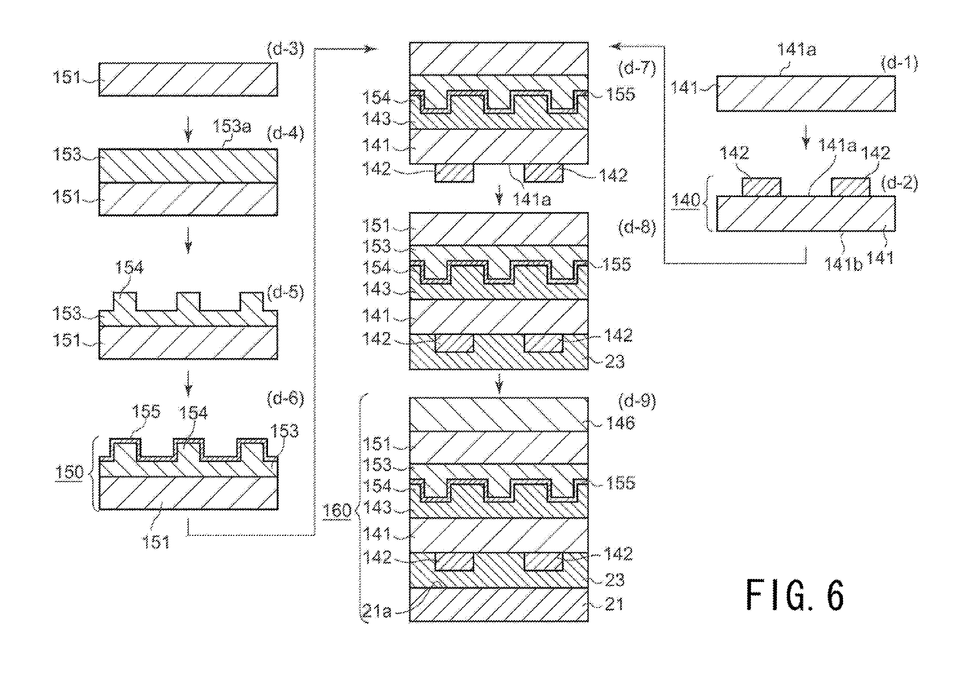

A modified embodiment of the second embodiment will be described below while referring to Fig. 6. In the second embodiment, the ink layer 112 and the hologram-pattern forming layer 113 have been stacked on the base material film 111, but instead of this, as shown in Fig. 6, after an ink layer 142 and a hologram-pattern forming layer 153 are formed on separate base material films, these base material films can also be stacked on the container 21. Details will be described below while referring to Fig. 6. Same reference numerals are assigned to components having structure common as in the second embodiment, and detail description thereof is omitted.

A film having hologram pattern 150 according to the modified embodiment shown in Fig. 6 is disposed to be integrated with a printing film 140 such that, a hologram pattern 154 comes to the side of the outer surface 21a of the container 21 which is the object, and accordingly, a container having hologram pattern 160 is formed.

(1) Process of manufacturing printing film A base material film 141 on which the ink layer 142 is provided (Fig. 6 (d-1)) is of a material similar to the base material film 11 of the first embodiment, and by a similar method, the ink layer 142 is formed on an outer surface 141a of this base material film 141 (Fig. 6 (d-6)). The printing film 140 is formed by the process described above.

(2) Process of manufacturing film having hologram pattern
A material similar to the material of the base material film 11 can be used for a base material film 151 on which, a hologram-pattern forming layer 153 is to be provided (Fig. 6 (d-3)), and the hologram-pattern forming layer 153 is formed on this base material film 151 (Fig. 6 (d-4)). The hologram-pattern forming layer 153 can be formed by a similar method by using a material similar to the material of the hologram-pattern forming layer 13 of the first embodiment.

Next, the hologram pattern 154 is formed on an outer surface 153a of the hologram-pattern forming layer 153 (Fig. 6 (d-5)). The formation of the hologram pattern 154 is carried out similarly as the formation of the hologram pattern 14 of the first embodiment.

Finally, a vapor deposition layer 155 as a thin-film layer is formed on the hologram pattern 154, along the pattern (Fig. 6 (d-6)). This vapor deposition layer 155 is a layer having transparency and high refractive index similarly as in the second embodiment. The film having hologram pattern 150 is formed by the process described above.

(3) Process of sticking film having hologram pattern Firstly, an adhesive layer 143 is formed by applying an adhesive material on an inner surface 141b of the printing film 140, facing the outer surface 141a on which the ink layer 142 is provided. An adhesive material similar to the adhesive layer 23 of the first embodiment is used. Next, by curing the adhesive layer 143 while dabbing the uncured adhesive layer 143 at the hologram pattern 154 (the vapor deposition layer 155) of the film having hologram pattern 150, the printing film 140 and the film having hologram pattern 150 are stuck mutually (Fig. 6 (d-7)).

Next, the adhesive layer 23 is formed by applying an adhesive material on the outer surface 141a of the base material film 141 (Fig. 6 (d-8)). An adhesive material similar as in the first embodiment is used. Next, by curing the adhesive layer 23 while dabbing the uncured adhesive layer 23 at the outer surface 21a of the container 21, the printing film 140 and the film having hologram pattern 150 are stuck to the container 21 (Fig. 6 (d-9)). By this process, the hologram-pattern forming film 53 is disposed such that a side of the hologram pattern 154 is on a side near the outer surface 21a of the container 21.

Finally, a varnish layer 146 is formed by applying varnish on the base material film 151 (Fig. 6 (d-9)), and the container having hologram pattern 160 is completed. The varnish layer 146 can be applied in advance on a surface facing a surface of the base material film 151 on which the hologram-pattern forming layer 153 is provided, before sticking the film having hologram pattern 150 and the printing film 140 on which the adhesive layer 143 is formed.

In the container having hologram pattern 160 shown in Fig. 6, since it is possible to form the hologram-pattern forming layer 153 on a smooth base material film surface 151 without ink layer, the hologram pattern 154 in which, the shape of the mother die is transferred accurately can be formed.
Other actions and effects are similar as in the second embodiment.

Although the present invention has been described while referring to the abovementioned embodiments, the present invention is not restricted by the abovementioned embodiments, and modifications and changes within a range of an object of the modification and basic teachings of the present invention are possible.

### INDUSTRIAL APPLICABILITY

As it has been described above, since the film having hologram pattern according to the present invention can be maintained to have visibility of the hologram pattern without selecting a state and a condition of storage, transportation, and arrangement, it is useful for decoration of containers, packages, and other objects.

## Claims

1. A film having hologram pattern which is to be used by disposing on an outer surface of an object, comprising:
a hologram-pattern forming layer, on one surface of which, a hologram pattern is formed, and a thin-film layer is formed along that shape, on the hologram pattern; and
at least one layer which is disposed at an outer side of the hologram-pattern forming layer.

2. The film having hologram pattern according to claim 1,
wherein
the hologram-pattern forming layer is disposed such that the hologram pattern comes to an outer surface side of the object, and
the thin-film layer is a vapor deposition layer.

3. The film having hologram pattern according to claim 2,
wherein a resin layer is formed at a distant side from an outer surface of the object with respect to the hologram-pattern forming layer.

4. The film having hologram pattern according to claim 3,
wherein the resin layer is a resin film on which, the hologram-pattern forming layer is formed.

5. The film having hologram pattern according to claim 4,
wherein the hologram-pattern forming layer is formed as a film on the resin layer, via an ink layer.

6. The film having hologram pattern according to claim 5,
wherein a second ink layer which is different from the ink layer is formed on a surface of a resin layer, on an opposite side of a surface on which, the ink layer and the hologram-pattern forming layer are formed.

7. The film having hologram pattern according to one of claims 3 to 5, wherein an ink layer is formed on a surface of the resin layer, which is distant from the outer surface of the object.

8. The film having hologram pattern according to claim 7,
wherein the ink layer is formed directly on the resin layer.

9. The film having hologram pattern according to one of claims 2 to 8, wherein the film having hologram pattern is stuck to the outer surface of the object by an adhesive layer which is formed on the vapor deposition layer.

10. The film having hologram pattern according to one of claims 2 to 9, wherein the vapor deposition layer has reflectivity.

11. The film having hologram pattern according to one of claims 2 to 9, wherein the vapor deposition layer has transparency and high refractive index.

12. The film having hologram pattern according to claim 1,
wherein
the hologram-pattern forming layer is disposed such that the hologram pattern comes at a side distant from the outer surface of the object, and
the thin-film layer is a vapor deposition layer.

13. The film having hologram pattern according to claim 12,
wherein in the hologram-pattern forming layer, a resin layer is disposed on an outer surface side of the object.

14. The film having hologram pattern according to claim 13,
wherein in the resin layer, an ink layer is formed on a surface on an outer surface side of the object.

15. The film having hologram pattern according to one of claims 12 to 14, wherein the vapor deposition layer has transparency and high refractive index.

16. The film having hologram pattern according to one of claims 3 to 11, and claims 13 to 15, wherein the resin layer is a PET film.

17. The film having hologram pattern according to one of claims 1 to 16, wherein the object is a container.

18. A container having hologram pattern comprising:
a hologram-pattern forming layer on an outer surface, on one surface of which, a hologram pattern is formed, wherein
a thin-film layer is formed along a shape thereof, on the hologram pattern, and furthermore
at least one layer is disposed at an outer side of the thin-film layer.
